(19) **Europäisches Patentamt / European Patent Office / Office européen des brevets**

(11) **EP 2 695 231 B1**

(12) **FASCICULE DE BREVET EUROPEEN**

(45) Date de publication et mention de la délivrance du brevet:
**04.03.2015 Bulletin 2015/10**

(21) Numéro de dépôt: **12718289.7**

(22) Date de dépôt: **03.04.2012**

(51) Int Cl.:
*H01M 6/50* (2006.01)   *H01M 10/052* (2010.01)
*H01M 4/13* (2010.01)   *H01M 10/058* (2010.01)
*H01M 4/74* (2006.01)   *H01M 4/04* (2006.01)
*H01M 10/44* (2006.01)

(86) Numéro de dépôt international:
**PCT/FR2012/050717**

(87) Numéro de publication internationale:
**WO 2012/136925 (11.10.2012 Gazette 2012/41)**

(54) **PRECURSEUR D'ACCUMULATEUR LITHIUM-ION A ELECTRODE SACRIFICIELLE DE LITHIUM ET ELECTRODE TEXTILE POSITIVE A CONVERSION**

LITHIUMIONENBATTERIEVORLÄUFER MIT EINER OPFERLITHIUMELEKTRODE UND POSITIVEN TEXTILEN WANDLERELEKTRODE

LITHIUM-ION BATTERY PRECURSOR INCLUDING A SACRIFICIAL LITHIUM ELECTRODE AND A POSITIVE TEXTILE CONVERSION ELECTRODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.04.2011 FR 1152972**

(43) Date de publication de la demande:
**12.02.2014 Bulletin 2014/07**

(73) Titulaire: **Electricité de France**
**75008 Paris (FR)**

(72) Inventeurs:
• **VIDAL, Elodie**
**77690 Montigny sur Loing (FR)**
• **LASCAUD, Stéphane**
**77300 Fontainebleau (FR)**

(74) Mandataire: **Cabinet Plasseraud**
**52, rue de la Victoire**
**75440 Paris Cedex 09 (FR)**

(56) Documents cités:
**EP-A2- 1 207 571      WO-A1-99/04448**
**FR-A1- 2 901 641      US-A- 5 601 951**
**US-A- 5 871 863**

• **BADWAY F ET AL: "Carbon Metal Fluoride Nanocomposites. HIGH-CAPACITY REVERSIBLE METAL FLUORIDE CONVERSION MATERIALS AS RECHARGEABLE POSITIVE ELECTRODES FOR LI BATTERIES", JOURNAL OF THE ELECTROCHEMICAL SOCIETY, ELECTROCHEMICAL SOCIETY. MANCHESTER, NEW HAMPSHIRE, US, vol. 150, no. 10, 15 août 2003 (2003-08-15), pages A1318-A1327, XP002307881, ISSN: 0013-4651, DOI: 10.1149/1.1602454**

## Description

L'invention concerne un précurseur d'un accumulateur lithium-ion contenant une électrode sacrificielle de lithium métallique, ainsi qu'un procédé de fabrication d'un accumulateur lithium-ion à partir d'un tel précurseur.

La terminologie « lithium-ion » (Li-ion) définit généralement une technologie dans laquelle la cathode et l'anode comprennent chacune un matériau réagissant électrochimiquement de façon réversible avec le lithium, et un électrolyte contenant des ions lithium. Les matériaux réagissant électrochimiquement de façon réversible avec le lithium sont par exemple des matériaux d'insertion, contenant ou non du lithium, ou du carbone ou des matériaux de conversion. L'électrolyte contient généralement des sels fluorés de lithium en solution dans un solvant organique aprotique.

La demande de brevet français FR 2 870 639 au nom de la Demanderesse décrit une électrode pour accumulateurs lithium-ion caractérisée par la présence, à la surface du collecteur d'électrons, d'une couche de matière électrochimiquement active « nanostructurée » contenant des nanoparticules constituées d'un composé, par exemple d'un halogénure, du métal ou des métaux formant le collecteur d'électrons. La structure particulière de la matière électrochimiquement active permet d'améliorer les performances des accumulateurs en termes de puissance et de densité d'énergie massique.

La demande de brevet française FR 2 901 641, également au nom de la Demanderesse, décrit un perfectionnement de l'électrode nanostructurée ci-dessus, résidant principalement dans la structure textile de l'électrode et des demi-accumulateurs (électrode + séparateur) fabriqués à partir de celle-ci.

F.Badway *et al.* (F. Badway, N. Pereira, F. Cosandey, C.G. Amatucci, J.Electrochem.Soc., 150, A1209 (2003)) ont étudié la réaction du lithium avec les fluorures de métaux tels que les fluorures de fer ou de bismuth. Cette réaction conduit à la conversion du fluorure de métal en une couche nanostructurée de métal et de fluorure de lithium. Les fluorures de fer présentent notamment de nombreux intérêts. Tout d'abord, la réaction des fluorures de fer avec les ions lithium permet d'atteindre des capacités théoriques élevées (571mAh/g pour $FeF_2$ et 712mAh/g pour $FeF_3$) comparées à la capacité théorique d'un matériau d'électrode positive classique tel que $LiCoO_2$ (274mAh/g) et, surtout, le potentiel de cette réaction de conversion est compatible avec une utilisation en tant qu'électrode positive dans une batterie lithium-ion. De plus, les fluorures de fer sont peu chers et faiblement toxiques pour l'environnement. En pratique, Badway *et al.* ont obtenu, avec des accumulateurs constitués d'une électrode positive à base de nanocomposites de $FeF_3$ (85% $FeF_3$/15% C) et d'une électrode négative en lithium métallique, une capacité réversible de 600mAh/g sur le composite soit un gain de 400% par rapport à une électrode positive classique à base de $LiCoO_2$, à une tension moyenne de 2,2V soit un gain final de 200% en énergie avec un cyclage à 70°C.

La Demanderesse, dans le cadre de ses recherches visant à perfectionner les accumulateurs lithium-ion comportant des électrodes nanostructurées, a montré qu'il est possible pour l'homme du métier de former une couche de conversion à base de fluorure ou d'oxyfluorure de fer par traitement électrochimique d'un substrat à base de fer. Ledit traitement est par exemple une polarisation anodique à un potentiel compris entre 10 et 60V/ENH (Electrode Normale à Hydrogène) dans une solution contenant du fluorure d'ammonium $NH_4F$ à une concentration comprise entre 0,05mol/l et 0,1mol/l dans l'éthylèneglycol non anhydre. Ce traitement est suivi d'une étape de rinçage dans un solvant tel que le méthanol puis d'un séchage en étuve à une température de 120°C pendant une heure. L'électrode ainsi obtenue présente une couche de conversion comprenant du fluorure de fer.

Les accumulateurs lithium-ion utilisant une électrode positive à base de fluorure de fer (ou d'autres fluorures ou oxyfluorures de métaux) sont toutefois plus complexes que les accumulateurs lithium-ion classique.

En effet, lorsqu'on utilise une telle électrode positive nanostructurée associée à une électrode négative par exemple à base de graphite pour la fabrication de batteries lithium-ion, on se trouve confronté au problème que l'accumulateur ainsi constitué est dépourvu de source de lithium.

L'idée à la base de la présente invention est d'utiliser, comme source d'ions lithium, une électrode sacrificielle.

L'utilisation d'électrodes sacrificielles de lithium pour la fabrication d'accumulateurs est déjà connue.

Ainsi, le brevet US 5 871 863, par exemple, divulgue l'utilisation d'une électrode sacrificielle de lithium en vue d'accroître la capacité massique et volumique d'électrodes positives à base d'oxyde de manganèse lithié ($LiMn_2O_4$), ce matériau ayant une capacité volumique inférieure de 10 à 20% à celle du matériau $LiCoO_2$ présenté comme matériau de référence. Un feuillard de lithium ou d'alliage de lithium sacrificiel est mis en contact direct ou indirect avec l'électrode positive constituée d'oxyde de manganèse lithié. Dans un mode de réalisation, un conducteur électronique est intercalé entre le feuillard de lithium et l'électrode positive afin de limiter le caractère exothermique de la réaction d'autodécharge entre ces deux éléments en présence d'une solution d'électrolyte. Cette réaction d'auto-décharge conduit à l'insertion d'une quantité d'ions lithium supplémentaire dans le matériau d'électrode positive. Compte-tenu de la structure en feuilles des électrodes et de l'accumulateur, il est nécessaire, pour garantir une répartition uniforme des ions lithium, d'appliquer le feuillard sur l'ensemble de la surface de l'électrode positive, autrement dit, le rapport de la surface géométrique du feuillard de lithium à la surface géométrique cumulée des électrodes positives ne devrait pas être trop faible et tendre idéalement vers 1 (lorsque toute la surface des électrodes positives est couverte du feuillard de lithium). L'épaisseur du feuillard utilisé dans l'exemple de US 5 871 863 est de 30 μm.

La Demanderesse, dans le cadre de ses recherches visant à perfectionner les accumulateurs lithium-ion comportant des électrodes nanostructurées telles que décrites dans FR 2 901 641, a découvert que, grâce à la structure textile des électrodes positives et grâce à un agencement particulier des différents composants de l'accumulateur, il était possible d'utiliser du lithium métallique en tant que source de lithium, et ceci de façon beaucoup plus simple que dans le brevet US 5 871 863 discuté ci-dessus.

En effet, dans le précurseur d'accumulateur de la présente invention, décrit en détail ci-après, on met à profit le fait que la structure textile des électrodes positives nanostructurées, même lorsque celles-ci sont empilées les unes sur les autres ou enroulées sur elles-mêmes, permet le passage d'ions lithium dans toutes les directions, et notamment dans un sens perpendiculaire au plan des électrodes textiles. Il en résulte une diffusion régulière des ions lithium dans l'ensemble de l'accumulateur et/ou précurseur d'accumulateur.

Dans la présente invention il n'est ainsi pas nécessaire d'appliquer un feuillard de lithium sur chacune des électrodes réceptrices de lithium (comme dans US 5 871 863), mais un seul feuillard de lithium, ou un nombre peu élevé de feuillards, d'épaisseur relativement plus importante, suffit pour introduire la quantité de lithium souhaitée de façon régulière dans l'ensemble des électrodes positives réceptrices des ions lithium.

La présente invention a par conséquent pour objet un précurseur d'accumulateur lithium-ion comportant à la fois une ou plusieurs électrodes textiles nanostructurées superposées et au moins une électrode de lithium sacrificielle, c'est-à-dire une électrode en lithium ou alliage de lithium qui sera partiellement ou totalement consommée au cours de la préparation de l'accumulateur définitif à partir du précurseur d'accumulateur.

Le précurseur d'accumulateur de la présente invention comprend

- un ou plusieurs modules d'électrodes formés chacun par

   (a) au moins un précurseur d'électrode positive textile, constitué d'une structure métallique textile, fluorée ou oxyfluorée en surface, à base d'un ou de plusieurs métaux de transition des groupes 4 à 12 de la Classification Périodique des Eléments,
   (b) un séparateur polymérique, imprégné d'une solution d'un sel de lithium dans un solvant organique aprotique, ledit séparateur recouvrant la totalité de la surface du précurseur d'électrode positive textile (a),
   (c) un précurseur d'électrode négative formant une matrice solide, de préférence continue, dans laquelle est enfermée la structure formée par (a) et (b), et

- au moins une électrode de lithium métallique, formée par un feuillard de lithium métallique supporté par un conducteur électrique, séparée du ou des modules d'électrodes par un séparateur polymérique imprégné d'une solution d'un sel de lithium dans un solvant organique aprotique,

Le rapport de la surface géométrique cumulée du ou des feuillards de lithium à la surface géométrique cumulée de l'ensemble des précurseurs d'électrodes positives textiles étant compris dans la fourchette allant de 0,05 à 0,33, de préférence de 0,1 à 0,25.

Le précurseur d'accumulateur de la présente invention contient ainsi un ou plusieurs « modules d'électrodes » constitués chacun d'un précurseur d'électrode négative formant une matrice, de préférence continue, dans laquelle est enfermé un précurseur d'électrode positive textile ou un empilement de plusieurs précurseurs d'électrode positive textile, un séparateur polymérique imprégné d'un electrolyte liquide enrobant les fibres du précurseur d'électrode positive et l'isolant ainsi totalement du précurseur d'électrode négative.

Le précurseur d'électrode négative comprend un matériau d'insertion d'ions lithium couramment utilisé dans les accumulateurs lithium-ion. De tels matériaux sont connus par l'homme du métier. On peut citer à titre d'exemples de tels matériaux, le graphite, le carbone ou l'oxyde de titane. Le précurseur d'électrode négative comprend en outre avantageusement un liant polymère, de préférence du poly(fluorure de vinylidène) (PVDF) ou un copolymère de fluorure de vinylidène et d'hexafluoropropylène (PVDF-HFP).

Chaque précurseur d'électrode positive comprend

- un collecteur d'électrons contenant un ou plusieurs métaux de transition des groupes 4 à 12 de la Classification Périodique des Eléments, et
- à la surface du collecteur d'électrons, une couche de fluorure ou d'oxyfluorure formée par traitement chimique ou électrochimique du collecteur d'électrons.

Lors de la préparation de l'accumulateur à partir du précurseur d'accumulateur de la présente invention, la couche de fluorure ou d'oxyfluorure d'au moins un métal de transition à la surface du collecteur d'électrons, réagira avec les ions lithium provenant de l'électrode de lithium sacrificielle pour former une couche de conversion nanostructurée. Cette couche de conversion nanostructurée, décrite en détail dans les demandes FR 2 870 639 et FR 2 901 641, constitue la matière électrochimiquement active de l'électrode positive de l'accumulateur lithium-ion. Elle contient des nanoparticules ayant un diamètre moyen compris entre 1 et 1000 nm, de préférence entre 10 et 300 nm, ou des agglomérats de telles nanoparticules.

Le ou les métaux de transition du collecteur d'électrons sont de préférence choisis dans le groupe formé par le nickel, le cobalt, le manganèse, le cuivre, le chrome et le fer, le fer étant particulièrement préféré.

Dans un mode de réalisation particulièrement préféré, le précurseur d'électrode positive textile est en acier non allié ou faiblement allié, fluoré ou oxyfluoré en surface.

Le précurseur d'électrode positive et l'électrode positive ont une structure textile, autrement dit une structure composée d'une multitude de fibres juxtaposées et/ou entremêlées, de façon ordonnée ou désordonnée. Il peut s'agir notamment d'une structure textile tissée ou d'une structure textile non-tissée.

La structure textile utilisée pour former le précurseur d'électrode positive est de préférence formée de fils très fins, peu espacés les uns des autres. En effet, plus les fils sont fins et plus le nombre de fils par unité de surface est important, plus la surface spécifique (déterminée par BET ou par spectroscopie d'impédance électrochimique) est élevée. La finesse des fils peut toutefois être limitée par l'aptitude au tréfilage des métaux ou alliages métalliques utilisés. Alors que certains métaux et alliages tels que le cuivre, l'aluminium, le bronze, le laiton et certains aciers alliés au chrome et au nickel se prêtent très bien au tréfilage et peuvent ainsi être obtenus sous forme de fils très fins, d'autres métaux ou alliages tels que les aciers ordinaires sont plus difficiles à tréfiler et conviennent mieux pour des structures à fibres courtes, telles que les non-tissés.

De manière générale, le diamètre équivalent de la section des fils ou fibres métalliques composant le précurseur d'électrode positive est compris entre 5 $\mu$m et 1 mm, de préférence entre 10 $\mu$m et 100 $\mu$m et en particulier entre 15 $\mu$m et 50 $\mu$m. On entend par « diamètre équivalent » le diamètre du cercle possédant la même surface que la section des fils ou fibres.

Dans l'électrode positive, la couche de conversion (matière électrochimiquement active) recouvre de préférence entièrement la surface du collecteur d'électrons et a de préférence une épaisseur comprise entre 30 nm et 15000 nm, en particulier entre 30 nm et 12000 nm.

Le précurseur de l'électrode positive textile a de préférence une structure non tissée, formée de fibres courtes ayant de préférence une longueur moyenne comprise entre 1 cm et 50 cm, de préférence entre 2 cm et 20 cm, et un diamètre équivalent entre 5 $\mu$m et 50 $\mu$m.

La Demanderesse utilise de préférence des feutres en laine d'acier disponibles dans le commerce. Ces feutres ont de préférence une masse volumique comprise entre 0,05 et 5 g/cm³, en particulier entre 1 et 3 g/cm³, ces valeurs étant celles déterminées sur un feutre comprimé par application d'une pression de 1 bar.

Le précurseur d'électrode positive, du fait de sa structure textile, est perméable aux ions, et en particulier aux ions lithium provenant de l'électrode sacrificielle. Lorsque cette structure textile est très dense, il peut être souhaitable d'augmenter cette perméabilité ou « porosité » en perçant la structure textile de trous ou ouvertures qui sont de préférence répartis régulièrement sur toute la surface de la structure textile. Ces trous s'ajoutent alors à ceux naturellement présents dans la structure textile. Lorsque, dans la présente demande, on mentionne les « trous » ou « ouvertures » du précurseur de l'électrode textile positive, ce terme englobe toujours les ouvertures intrinsèques à la structure textile et celles éventuellement créées par exemple par perçage de la structure textile.

Le précurseur d'électrode positive est couvert, sur toute sa surface, d'un revêtement polymérique assurant la fonction de séparateur. Dans le précurseur d'accumulateur de la présente invention, ce revêtement polymérique est imprégné et gonflé par un électrolyte liquide aprotique contenant au moins un sel de lithium. Dans la présente invention le revêtement de séparateur gonflé par l'électrolyte liquide a de préférence une épaisseur suffisamment faible pour que la structure textile du précurseur d'électrode positive soit toujours apparente. Autrement dit, le dépôt du séparateur n'obture de préférence pas entièrement les ouvertures, trous ou mailles de la structure textile, que celle-ci soit tissée ou non-tissée.

La non-obturation de ces trous par le séparateur n'est toutefois pas une caractéristique technique essentielle de l'invention et la présente invention fonctionnera également lorsque le séparateur polymérique obture totalement les ouvertures de l'électrode textile. En effet, le séparateur imprégné d'une solution d'un sel de lithium est perméable aux ions lithium provenant de l'électrode sacrificielle et laissera donc passer ces ions lors du premier cyclage.

L'éventuel vide du précurseur d'électrode positive recouvert du séparateur sera comblé ensuite par le matériau du précurseur d'électrode négative, l'ensemble formé par le précurseur d'électrode positive, le séparateur imprégné de l'électrolyte liquide et le précurseur d'électrode négative formant un module d'électrodes. On peut ainsi définir un taux de vide du précurseur d'électrode positive recouvert du séparateur qui est égal au volume du précurseur d'électrode négative de chaque module d'électrodes rapporté au volume total dudit module d'électrodes. Ce taux de vide est de préférence compris entre 20 et 90 %, de préférence entre 25 et 75 % et en particulier entre 50 et 70 %.

L'épaisseur de chaque module d'électrodes peut varier très largement en fonction du nombre d'électrodes textiles superposées les unes sur les autres. Elle est comprise généralement entre 100 $\mu$m et 5 cm, de préférence entre 150 $\mu$m et 1 cm et en particulier entre 200 $\mu$m et 0,5 cm.

Bien que le dépôt d'un revêtement mince de séparateur sur le précurseur d'électrode positive textile puisse se faire par différentes méthodes appropriées, telles que l'immersion, la pulvérisation ou le dépôt chimique en phase vapeur, le dépôt de ce revêtement se fait de préférence par voie électrochimique et en particulier selon une technique connue sous le nom de cataphorèse. Cette technique où la structure métallique à revêtir est introduite, en tant que cathode, dans une solution aqueuse contenant les composants de base du revêtement à déposer, permet en effet un dépôt extrêmement fin, régulier et continu, couvrant la totalité de la surface d'une structure, même de géométrie très complexe. Pour pouvoir migrer vers la cathode, c'est-à-dire vers la structure textile, le composant à déposer doit avoir une charge positive. Il est connu par exemple d'utiliser des monomères cationiques qui, après dépôt sur la cathode et polymérisation, forment un revêtement polymère insoluble.

Dans un mode de réalisation préféré du précurseur d'accumulateur de la présente invention, le séparateur est un séparateur déposé par cataphorèse à partir d'une solution aqueuse contenant de tels monomères cationiques, de préférence des monomères cationiques comportant des fonctions ammonium quaternaire. Le séparateur est par conséquent de préférence un revêtement polymérique formé par un polymère contenant des fonctions ammonium quaternaire.

Les sels de lithium incorporés dans les électrolytes liquides, utilisables dans les accumulateurs lithium-ion, sont connus de l'homme du métier. Il s'agit généralement de sels de lithium fluorés. On peut citer à titre d'exemple $LiCF_3SO_3$, $LiClO_4$, $LiN(C_2F_5SO_2)_2$, $LiN(CF_3SO_2)_2$, $LiAsF_6$, $LiSbF_6$, $LiPF_6$ et $LiBF_4$. De préférence ledit sel est choisi dans le groupe formé par $LiCF_3SO_3$, $LiClO_4$, $LiPF_6$, et $LiBF_4$.

En général, ledit sel est dissous dans un solvant organique aprotique anhydre constitué généralement de mélanges en proportions variables de carbonate de propylène, de carbonate de diméthyle et de carbonate d'éthylène. Ainsi, ledit électrolyte comprend généralement, comme il est connu de l'homme du métier, au moins un carbonate cyclique ou acyclique, de préférence cyclique. Par exemple, ledit électrolyte est du LP30, composé commercial de la société Merck contenant du carbonate d'éthylène (EC), du carbonate de diméthyle (DMC) et du $LiPF_6$, la solution contenant une mole/litre de sel et des quantités identiques de chacun des deux solvants.

Comme expliqué ci-devant, le précurseur d'accumulateur de la présente invention contient en outre au moins une électrode « sacrificielle » de lithium métallique. Cette électrode est appelée ainsi parce que, lors du premier cyclage de formation au cours duquel le précurseur d'accumulateur de la présente invention est converti en accumulateur lithium-ion, cette électrode est partiellement ou totalement consommée. Cette électrode sacrificielle est de préférence formée par un feuillard de lithium métallique supporté par un conducteur électrique. Ce conducteur électrique est par exemple une plaque de cuivre et joue le rôle de collecteur d'électrons de l'électrode de lithium.

Le précurseur d'accumulateur de la présente invention présente l'avantage de pouvoir fonctionner avec des feuillards commerciaux ayant des épaisseurs standards comprises entre 50 µm et 150 µm. Grâce à la libre diffusion des ions lithium à travers les précurseurs d'électrode positive textile, un seul feuillard suffisamment épais, ou deux feuillards prenant en sandwich un ou plusieurs modules d'électrodes, permettent d'approvisionner l'ensemble des précurseurs d'électrodes positives avec une quantité suffisante d'ions lithium.

Le rapport de la surface géométrique cumulée du ou des feuillards de lithium à la surface géométrique cumulée de l'ensemble des précurseurs d'électrodes positives textiles est compris dans la fourchette allant de 0,05 à 0,33, de préférence de 0,1 à 0,25. En d'autres termes, on utilisera de préférence pour un feuillard de lithium de 3 à 20 électrodes textiles positives, de préférence 4 à 10 électrodes positives, d'une surface géométrique identique à celle du feuillard de lithium.

Dans le cas de modules d'électrodes enroulés, l'électrode sacrificielle de lithium peut entourer la structure enroulée et/ou se trouver au centre de celle-ci.

Ce qui suit est un exemple de calcul des dimensions de l'électrode sacrificielle nécessaire pour fournir la quantité de lithium appropriée :

Pour un précurseur d'accumulateur de 10Ah constitué d'un empilement de 2 modules d'électrodes de 5Ah, chacun étant composé : (a) de 5 précurseurs d'électrode positive textile ; b) d'un séparateur polymérique recouvrant la totalité de la surface des précurseurs d'électrode positive textile ; (c) d'une électrode négative à base de graphite, dont la capacité massique réversible est de 340 mAh/g, d'un polymère liant, de carbone, formant une matrice solide d'une densité de 1,7 g/cm$^3$, (après imprégnation par l'électrolyte) d'une capacité volumique de 405 mAh/cm$^3$ et remplissant le volume libre à l'intérieur des 5 précurseurs d'électrode positive avec leur séparateur (a) + (b).

Chaque précurseur d'électrode positive a une densité apparente de 2,3 g/cm$^3$, un taux de vide de 64%, une épaisseur de 142 µm. Il possède une couche de conversion constituée de fluorure de fer $FeF_3$ de grammage 5mg/cm$^2$ de surface géométrique. Sa capacité massique lors du cyclage est de 500mAh/g de fluorure de fer et la capacité nécessaire pour former la couche de conversion nanostructurée est de 712mAh/g. Chaque précurseur d'électrode positive est revêtu d'une couche de séparateur gonflé par l'électrolyte de 5µm d'épaisseur. L'ensemble précurseur d'électrode positive avec son séparateur (a)+(b) a donc une épaisseur de 142 + 2*5 = 152µm et un taux de vide de 41%.

Chaque module comprenant 5 électrodes positives textiles aura, lors du cyclage, une capacité de 5 *

5mg/cm$^2$*500mAh/g = 12,5mAh/cm$^2$. L'épaisseur d'un module d'électrodes positives textiles avec leur séparateur est de 5 x 152 = 760 $\mu$m. Le volume occupé par un module, c'est à dire par les 5 précurseurs d'électrodes positives textiles avec leur séparateur, est de $\dfrac{5000\,mAh}{12,5\,mAh/cm^2} * 760.10^{-4}\,cm = 30,4\,cm^3$ .

Le taux de vide de l'ensemble précurseur d'électrode positive avec son séparateur (a)+(b) étant de 41%, le volume libre à l'intérieur du précurseur d'électrode positive textile avec son séparateur est de 30,4*0,41 = 12,5 cm$^3$. La capacité du précurseur d'électrode négative occupant ce volume de 12,5cm$^3$ sera de 12,5 cm$^3$ x 405 mAh/cm$^3$ =5 Ah. Cette capacité est la même que celle du module d'électrodes positives textiles qui lui est associé pour un fonctionnement harmonieux de l'accumulateur.

Lors de la première réduction électrochimique de l'électrode positive textile, il faudra fournir une quantité d'ions lithium correspondant à 712 mAh/g de couche de conversion soit 712mAh/g*5mg/cm$^2$=3,56 mAh/cm$^2$. De plus, afin de placer l'électrode négative à un potentiel inférieur à celui de l'électrode positive et de fournir les ions lithium qui resteront piégés dans l'électrode négative lors de la première charge-décharge de l'accumulateur, il est intéressant d'apporter à l'aide de l'électrode sacrificielle une capacité égale à environ 10% de la capacité de l'électrode négative, soit pour chaque module de 12,5mAh/cm$^2$, une capacité de 1,25mAh/cm$^2$.

Il s'agit donc de fournir une capacité de 3,56mAh/cm$^2$ à chacune des 5 électrodes positives du module et 1,25mAh/cm$^2$ à l'électrode négative occupant le volume libre de l'électrode positive avec son séparateur, soit une capacité totale de 19,05mAh/cm$^2$. Une électrode sacrificielle de lithium métallique pouvant délivrer cette capacité suivant un processus d'oxydation électrochimique du lithium métallique en ions lithium doit avoir une épaisseur minimum de

$$\frac{19,05}{1000}\,Ah/cm^2 * \frac{1}{26,8\,Ah/mol} * 6,9\,g/mol * \frac{1}{0,54\,g/cm^3} = 9,1.10^{-3}\,cm = 91\mu m$$

Ainsi un précurseur d'accumulateur composé de deux modules d'électrodes nécessitera l'utilisation de deux feuillards de lithium d'épaisseur minimale 91$\mu$m ou bien d'un seul feuillard de lithium dont l'épaisseur minimum sera de 2*91=182$\mu$m.

Par ailleurs, comme déjà mentionné en introduction, il pourra être intéressant de sur-dimensionner l'électrode sacrificielle de lithium de façon à ce qu'elle ne soit pas entièrement consommée lors de l'étape de conversion du précurseur d'accumulateur. Cette électrode de lithium résiduelle pourra en effet être avantageusement utilisée, en fin de vie de l'accumulateur, pour récupérer sous forme de lithium métallique le lithium incorporé dans les électrodes négatives et positives de l'accumulateur et donc en faciliter le recyclage. Le procédé de récupération du lithium comprend alors plusieurs étapes :

(1) une étape de recharge complète (i.e. une extraction complète des ions lithium) des électrodes négatives sur l'électrode sacrificielle,

(2) une étape de décharge complète (i.e. une extraction complète des ions lithium) des électrodes positives sur l'électrode sacrificielle

(3) une étape d'ouverture et d'évacuation de l'électrolyte, et

(4) une étape de récupération du lithium métallique soit par enlèvement mécanique, soit par fusion du lithium à une température supérieure à 180°C et récupération par coulée gravitée.

Le précurseur d'accumulateur de la présente invention comprend de préférence plusieurs modules d'électrodes de forme plane et de dimensions identiques superposés parallèlement les uns aux autres.

Deux modules d'électrodes sont de préférence séparés par un collecteur d'électrons, inséré entre eux, en contact électrique avec le précurseur d'électrode négative (c). Afin de ne pas empêcher la libre diffusion des ions lithium provenant de l'électrode de lithium sacrificielle dans l'ensemble des modules d'électrodes, le collecteur d'électrons comporte un certain nombre d'ouvertures réparties de préférence uniformément sur toute sa surface. Le collecteur d'électrons du précurseur d'électrode négative est par exemple une grille métallique ou une structure textile métallique. Le collecteur d'électrons du précurseur d'électrode négative est de préférence constitué de cuivre. Dans un mode de réalisation préféré, le collecteur d'électrons est formé par une ou plusieurs grilles en cuivre disposées parallèlement au plan du ou des modules d'électrodes et intercalées entre ceux-ci.

Les vides ou ouvertures du collecteur d'électrons du précurseur d'électrode négative (c) sont remplis par le matériau du précurseur d'électrode négative, établissant ainsi une continuité de conduction ionique entre deux modules d'électrodes voisins.

Le feuillard de lithium métallique formant l'électrode sacrificielle est de préférence posé contre l'empilement de modules d'électrodes de manière à ce que le plan du feuillard soit parallèle au plan du ou des modules d'électrodes et donc parallèle au plan des précurseurs d'électrodes positives textiles. Comme déjà mentionné ci-dessus, le feuillard de lithium n'est pas en contact électrique avec le précurseur d'électrode négative mais un séparateur à conduction ionique est inséré entre les deux.

Dans un mode de réalisation préféré, un feuillard de lithium, supporté par un collecteur d'électrons, est prévu de part et d'autre de l'empilement de modules d'électrodes. Le ou les feuillards de lithium couvrent de préférence la totalité d'une ou des deux faces principales de l'empilement.

Le précurseur d'accumulateur lithium-ion de la présente invention est converti en accumulateur par un procédé en deux étapes : (i) une première étape de réduction électrochimique du (ou des) précurseur(s) d'électrode positive par l'électrode sacrificielle. Au cours de cette étape le feuillard de lithium métallique est consommé partiellement et les ions lithium migrent à travers le séparateur de l'électrode sacrificielle, le matériau du précurseur d'électrode négative, le séparateur de l'électrode positive vers la couche de fluorure ou d'oxyfluorure du précurseur d'électrode positive avec laquelle ils réagissent pour former la couche de conversion nanostructurée qui constitue la matière active de l'électrode positive finale.

(ii) une deuxième étape de réduction électrochimique du précurseur d'électrode négative par l'électrode sacrificielle. Au cours de cette étape le feuillard de lithium métallique est consommé totalement ou partiellement et les ions lithium migrent à travers le séparateur de l'électrode sacrificielle pour s'insérer dans le matériau de l'électrode négative. Cette étape est poursuivie jusqu'à ce que le potentiel de l'électrode négative mesuré par rapport à l'électrode de lithium métallique sacrificielle soit inférieur à 1,5 V.

La présente invention a par conséquent pour objet un procédé de fabrication d'un accumulateur lithium-ion à partir d'un précurseur d'accumulateur lithium-ion tel que décrit ci-dessus, ledit procédé consistant en :

(i) une étape de réduction électrochimique du ou des précurseurs d'électrode positive par l'électrode de lithium métallique sacrificielle, cette étape comprenant l'application d'un potentiel ou d'un courant entre l'électrode positive et l'électrode de lithium métallique sacrificielle et entraînant la consommation partielle de l'électrode de lithium métallique sacrificielle. Au cours de cette étape, on connecte l'électrode de lithium métallique sacrificielle au précurseur d'électrode positive via leurs connecteurs (collecteurs d'électrons) respectifs et l'on applique un potentiel, généralement compris entre 3,5 et 1,5 V, de manière à induire une oxydation électrochimique de l'électrode de lithium métallique sacrificielle, une réduction électrochimique de la couche de fluorure ou d'oxyfluorure du précurseur d'électrode positive, et une diffusion lente des ions lithium depuis l'électrode de lithium métallique sacrificielle vers la couche de fluorure ou d'oxyfluorure du précurseur d'électrode positive.

(ii) une deuxième étape de réduction électrochimique du précurseur d'électrode négative par l'électrode de lithium métallique sacrificielle. Lors de cette étape un courant est appliqué entre l'électrode de lithium métallique sacrificielle et le précurseur d'électrode négative de manière à induire une oxydation électrochimique de l'électrode de lithium métallique sacrificielle, une réduction électrochimique de l'électrode négative jusqu'à ce que le potentiel de l'électrode négative mesuré par rapport à l'électrode de lithium métallique sacrificielle soit inférieur à 1,5 V.

Ces deux étapes peuvent être effectuées dans cet ordre, mais également dans l'ordre inverse, c'est-à-dire l'étape de réduction du précurseur de l'électrode négative par l'électrode de lithium métallique sacrificielle peut précéder celle de la réduction du précurseur d'électrode positive par l'électrode sacrificielle de lithium.

Dans un mode de réalisation, la dernière étape du procédé est poursuivie jusqu'à ce que l'électrode de lithium ait totalement disparu.

Dans un autre mode de réalisation, on met fin à l'étape avant disparition complète de l'électrode de lithium, de manière à conserver une électrode de lithium résiduelle utile, en fin de vie de l'accumulateur, au recyclage du lithium.

Au cours de l'étape (i), on applique de préférence un potentiel d'abord relativement important puis, de plus en plus faible. Cette réduction du potentiel appliqué se fait de préférence par paliers, c'est-à-dire on maintient la valeur du potentiel pendant un temps donné jusqu'à ce que l'intensité de courant devienne trop faible, puis on diminue la valeur du potentiel pour la maintenir de nouveau à cette nouvelle valeur jusqu'à ce que l'intensité de courant ait de nouveau atteint une valeur faible.

L'atteinte de cette valeur de courant faible correspond à l'atteinte d'un état où la concentration en ions lithium dans l'accumulateur est suffisamment homogène, c'est-à-dire où le gradient de concentration en ions lithium (nécessaire au passage du courant) dans l'accumulateur est faible. Cela signifie que les différents précurseurs d'électrode positive ont atteint le même niveau de potentiel par rapport à l'électrode de lithium sacrificielle. Le procédé par paliers de potentiel décroissants successifs permet ainsi de laisser le temps aux ions lithium de diffuser à l'intérieur du précurseur d'accumulateur et donc jusqu'aux différents précurseurs d'électrodes positives constituant ce précurseur d'accumulateur, et ce, à chaque palier de potentiel appliqué.

De la même façon, au cours de l'étape (ii), on applique de préférence un potentiel d'abord relativement important puis, de plus en plus faible jusqu'à atteindre le potentiel souhaité.

Lorsque l'électrode de lithium métallique sacrificielle a totalement été consommée ou lorsqu'on a apporté au précurseur d'électrode positive la quantité d'ions lithium souhaitée pour que sa couche de fluorure ou d'oxyfluorure ait été transformée en une couche de conversion nanostructurée et au précurseur d'électrode négative la quantité d'ions lithium nécessaire pour atteindre un potentiel inférieur à 1,5V par rapport à l'électrode de lithium métallique sacrificielle, on connecte, via une source de courant ou de potentiel, la ou les électrodes textiles positives aux collecteurs de courant de l'électrode négative et l'on effectue une première charge de l'accumulateur par passage d'un courant jusqu'à ce que le potentiel de fin de charge de l'accumulateur soit atteint.

La présente invention sera décrite plus en détail ci-après en référence aux figures, parmi lesquelles

la figure 1 représente un mode de réalisation d'un précurseur d'accumulateur de la présente invention et
les figures 2 et 3 représentent le même précurseur d'accumulateur respectivement au cours de la première et de la deuxième étape du procédé de fabrication d'un accumulateur de la présente invention.

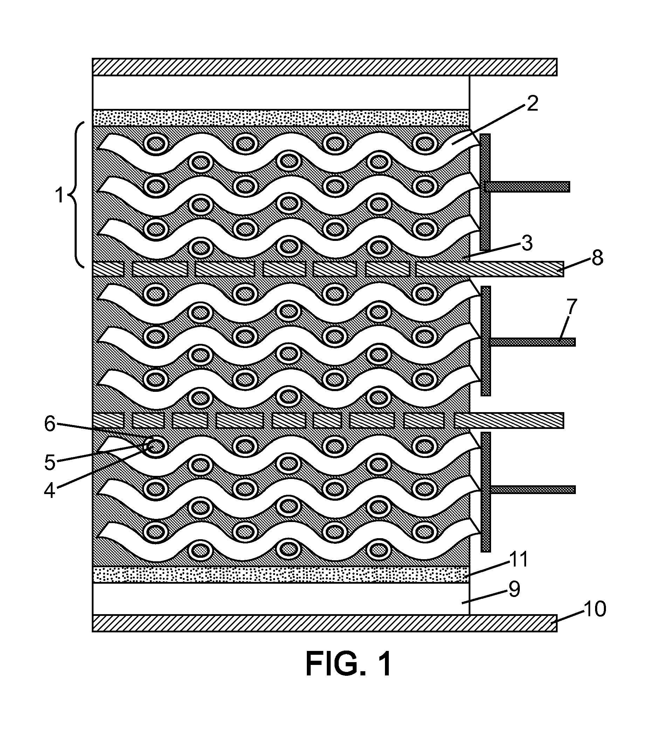

Le précurseur d'accumulateur représenté sur la Figure 1 comporte trois modules d'électrodes 1 comportant chacun trois précurseurs d'électrodes positives 2 empilés les uns sur les autres. Les précurseurs d'électrodes positives ont ici une structure textile tissée avec des fils de trame représentés en coupe transversale et des fils de chaîne en coupe longitudinale. Chaque fil de précurseur d'électrode positive comporte une partie centrale métallique 4, entourée d'une couche de fluorure ou d'oxyfluorure de métal 5, ladite couche de fluorure ou d'oxyfluorure de métal étant couverte à son tour par une mince couche de séparateur 6.

Les fils 2 des électrodes positives sont enfermés dans une matrice solide continue formant le précurseur d'électrode négative 3. Les précurseurs d'électrode positive 2 sont reliés à des connecteurs électriques 7 et le précurseur d'électrode négative 3 est en contact électrique avec les connecteurs électriques 8. Les connecteurs électriques 8 du précurseur d'électrode négative sont des grilles en cuivre disposées en alternance avec les modules d'électrodes 1. Le matériau du précurseur d'électrode négative 3 entoure non seulement totalement les fils des précurseurs d'électrode positive 2 mais remplit également les vides des connecteurs électriques 8 du précurseur d'électrode négative établissant ainsi un réseau continu de précurseur d'électrode négative s'étendant dans tout le volume de l'accumulateur. Le précurseur d'accumulateur représenté ici comprend deux électrodes sacrificielles formées chacune par un feuillard 9 en lithium métallique déposé sur un connecteur métallique 10. Le feuillard en lithium métallique est séparé du précurseur d'électrode négative 3 par une mince couche d'un séparateur 11.

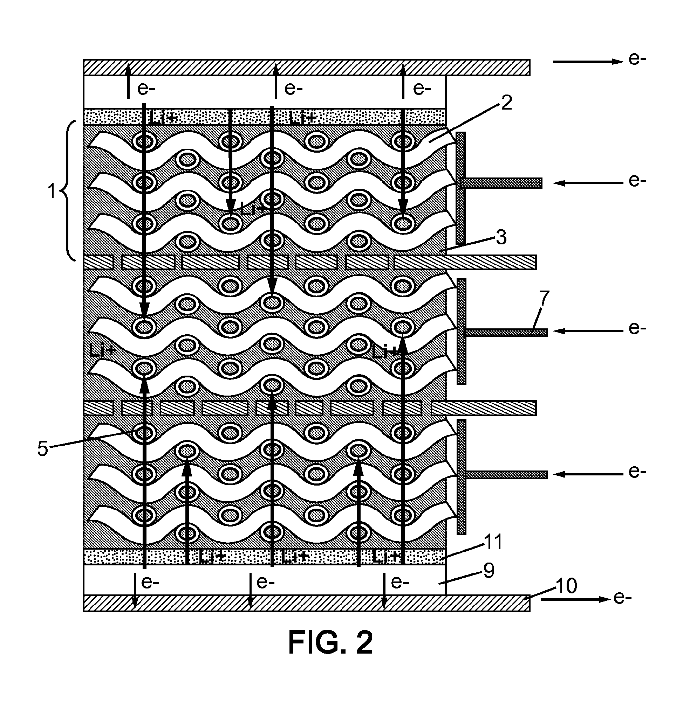

La figure 2 montre le processus électrochimique au cours de la première étape de conversion du précurseur d'accumulateur en accumulateur. L'application d'un potentiel entre les connecteurs 7 des précurseurs d'électrode positive 2 et les connecteurs 10 de l'électrode sacrificielle 9, provoque la migration des ions lithium depuis l'électrode sacrificielle 9 via l'électrode négative vers la couche de fluorure ou d'oxyfluorure de métal 5 du précurseur d'électrode positive 2. A l'issue de cette étape, la couche de fluorure ou d'oxyfluorure a été transformée en une couche de conversion nanostructurée.

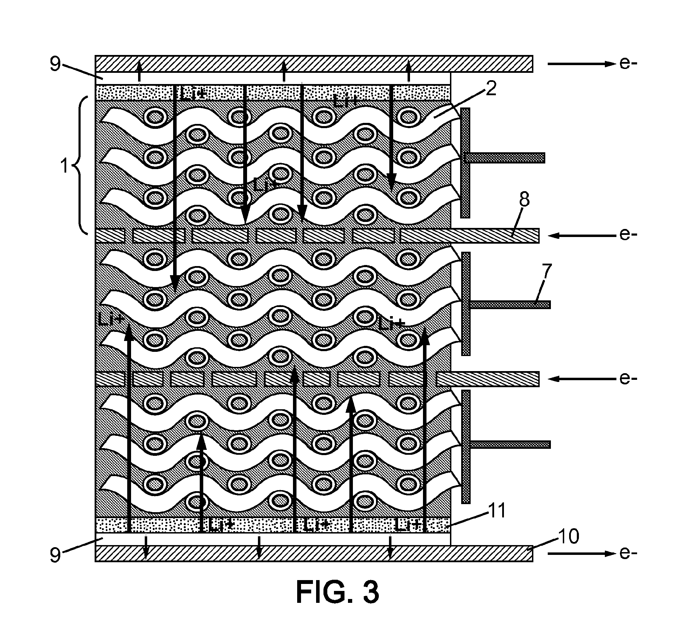

La figure 3 montre le processus électrochimique au cours de la deuxième étape du procédé de l'invention. L'application d'un potentiel ou d'un courant entre les connecteurs 8 des précurseurs d'électrode négative 3 et les connecteurs 10 de l'électrode sacrificielle 9, provoque la migration des ions lithium depuis l'électrode sacrificielle 9 vers le précurseur d'électrode négative 2. A l'issue de cette étape, c'est-à-dire lorsque le potentiel de l'électrode négative mesuré par rapport au lithium métallique de l'électrode sacrificielle a atteint une valeur inférieure au potentiel de l'électrode positive mesuré par rapport au lithium métallique de l'électrode sacrificielle à l'issue de l'étape (i), l'électrode sacrificielle 9 a presque totalement disparu. Les connecteurs 7 des précurseurs d'électrode positive 2 peuvent ensuite être reliés, via une source de tension ou de courant, aux connecteurs 8 de l'électrode négative 3 pour la première charge de l'accumulateur. Les ions lithium de l'électrode positive migrent alors vers l'électrode négative.

## Revendications

1. Précurseur d'accumulateur lithium-ion comprenant

 - un ou plusieurs modules d'électrodes (1) formés chacun par

 (a) au moins un précurseur d'électrode positive textile (2), constitué d'une structure métallique textile (4), fluorée ou oxyfluorée en surface (5), à base d'un ou de plusieurs métaux de transition des groupes 4 à 12 de la Classification Périodique des Eléments,
 (b) un séparateur polymérique (6), imprégné d'une solution d'un sel de lithium dans un solvant organique aprotique, ledit séparateur recouvrant la totalité de la surface du précurseur d'électrode positive textile,
 (c) un précurseur d'électrode négative (3) formant une matrice solide, de préférence continue, dans laquelle est enfermée la structure formée par (a) et (b), et

- au moins une électrode de lithium métallique sacrificielle, formée par un feuillard de lithium métallique (9) supporté par un conducteur électrique (10), séparée du ou des modules d'électrodes par un séparateur polymérique (11) imprégné d'une solution d'un sel de lithium dans un solvant organique aprotique,

**caractérisé par le fait que** le rapport de la surface géométrique cumulée du ou des feuillards de lithium à la surface géométrique cumulée de l'ensemble des précurseurs d'électrodes positives textiles est compris dans la fourchette allant de 0,05 à 0,33, de préférence de 0,1 à 0,25.

2. Précurseur d'accumulateur selon la revendication 1, **caractérisé par le fait que** la structure textile métallique fluorée ou oxyfluorée en surface est une structure non tissée, formée de fibres courtes ayant de préférence une longueur moyenne comprise entre 1 cm et 50 cm, de préférence entre 2 cm et 20 cm, et un diamètre équivalent compris entre 5 $\mu$m et 50 $\mu$m.

3. Précurseur d'accumulateur selon la revendication 1 ou 2, **caractérisé par le fait que** la structure métallique textile est en acier non allié ou faiblement allié.

4. Précurseur d'accumulateur selon l'une quelconque des revendications précédentes, **caractérisé par le fait que** plusieurs modules d'électrodes de forme plane et de dimensions identiques sont superposés parallèlement les uns aux autres.

5. Précurseur d'accumulateur selon l'une quelconque des revendications précédentes, **caractérisé par le fait que** le plan du feuillard de lithium de l'électrode de lithium métallique sacrificielle est parallèle au plan du ou des modules d'électrodes.

6. Précurseur d'accumulateur selon l'une quelconque des revendications précédentes, **caractérisé par le fait qu'**il comprend en outre un collecteur d'électrons (8), en contact électrique avec le précurseur d'électrode négative (c) de chacun des modules d'électrodes, ledit collecteur d'électrons étant formé de préférence par une ou plusieurs grilles en cuivre disposées parallèlement au plan du ou des modules d'électrodes et intercalées entre ceux-ci.

7. Procédé de fabrication d'un accumulateur lithium-ion à partir d'un précurseur d'accumulateur lithium-ion selon l'une quelconque des revendications précédentes, comprenant :

(i) une étape de réduction électrochimique du ou des précurseurs d'électrode positive par l'électrode de lithium métallique sacrificielle, cette étape comprenant l'application d'un potentiel ou d'un courant entre l'électrode positive et l'électrode de lithium métallique sacrificielle et entraînant la consommation partielle ou totale de l'électrode de lithium métallique sacrificielle, jusqu'à ce que la couche de fluorure ou d'oxyfluorure des précurseurs d'électrode positive ait été partiellement ou totalement transformée en une couche de conversion nanostructurée ; et
(ii) une étape de réduction électrochimique du précurseur de l'électrode négative par l'électrode de lithium métallique sacrificielle du précurseur d'accumulateur, cette étape comprenant le passage d'un courant de l'électrode de lithium métallique sacrificielle vers l'électrode négative jusqu'à ce que l'électrode négative ait un potentiel, mesuré par rapport à l'électrode de lithium métallique sacrificielle, inférieur à 1,5 V,

ces deux étapes pouvant être effectuées dans cet ordre ou dans l'ordre inverse.

8. Procédé selon la revendication 7, **caractérisé par le fait que** les étapes (i) et (ii) sont poursuivies jusqu'à disparition complète de l'électrode de lithium métallique sacrificielle.

9. Procédé selon la revendication 7, **caractérisé par le fait que** l'on arrête les étapes (i) et (ii) avant disparition complète de l'électrode de lithium métallique sacrificielle.

10. Procédé de fabrication selon l'une des revendications 7 à 9, **caractérisé par le fait que** l'on applique, au cours de la réduction électrochimique du ou des précurseurs d'électrodes positives, un potentiel de plus en plus faible, la réduction du potentiel appliqué se faisant de préférence par paliers.

**Patentansprüche**

1. Vorläufer für eine Lithiumionenbatterie mit:

   - einem oder mehreren Elektrodenmodulen (1), die jeweils gebildet sind durch:

   (a) mindestens eine textile positive Vorläuferelektrode (2), die aus einer an der Oberfläche (5) fluorierten oder oxyfluorierten textilen Metallstruktur (4) auf Basis eines oder mehrerer Übergangsmetalle der Gruppen 4 bis 12 des Periodensystems der Elemente besteht,
   (b) einen polymeren Separator (6), der mit einer Lösung, die durch Lösen eines Lithiumsalzes in einem aprotischen organischen Lösungsmittel hergestellt ist, imprägniert ist, wobei der Separator die gesamte Oberfläche der textilen positiven Vorläuferelektrode bedeckt,
   (c) eine negative Vorläuferelektrode (3), die eine Feststoffmatrix bildet, welche vorzugsweise kontinuierlich ist und in welche die aus (a) und (b) gebildete Struktur eingeschlossen ist,

   - mindestens einer Lithiummetall-Opferelektrode, die aus einer von einem elektrischen Leiter (10) getragenen Lithiummetallfolie (9) gebildet ist und mittels eines polymeren Separators (11) von dem oder den Elektrodenmodulen getrennt ist, wobei der polymere Separator (11) mit einer Lösung, die durch Lösen eines Lithiumsalzes in einem aprotischen organischen Lösungsmittel hergestellt ist, imprägniert ist,

   **dadurch gekennzeichnet, dass** das Verhältnis der Summe der geometrischen Oberflächen der Lithiumfolie oder Lithiumfolien zur Summe der geometrischen Oberflächen aller textilen positiven Vorläuferelektroden in einem Bereich zwischen 0,05 und 0,33, vorzugsweise zwischen 0,1 und 0,25, liegt.

2. Vorläufer nach Anspruch 1, **dadurch gekennzeichnet, dass** die an der Oberfläche fluorierte oder oxyfluorierte textile Metallstruktur eine Vliesstruktur ist, die aus kurzen Fasern gebildet ist, die bevorzugt eine durchschnittliche Länge zwischen 1cm und 50cm, stärker bevorzugt zwischen 2cm und 20cm, und einen äquivalenten Durchmesser zwischen $5\mu m$ und $50\mu m$ haben.

3. Vorläufer nach Anspruch 1 oder 2, **dadurch gekennzeichnet, dass** die textile Metallstruktur aus nichtlegiertem oder schwach legiertem Stahl ist.

4. Vorläufer nach einem der vorstehenden Ansprüche, **dadurch gekennzeichnet, dass** mehrere Elektrodenmodule ebener Form und identischer Abmessung parallel übereinander angeordnet sind.

5. Vorläufer nach einem der vorstehenden Ansprüche, **dadurch gekennzeichnet, dass** die Ebene der Lithiumfolie der Lithiummetall-Opferelektrode parallel zur Ebene des oder der Elektrodenmodule ist.

6. Vorläufer nach einem der vorstehenden Ansprüche, **dadurch gekennzeichnet, dass** er ferner einen Elektronensammler (8) aufweist, der in elektrischem Kontakt mit der negativen Vorläuferelektrode (c) jedes Elektrodenmoduls ist, wobei der Elektronensammler vorzugsweise aus einem oder mehreren Kupfergittern gebildet ist, die parallel zu dem oder den Elektrodenmoduln angeordnet und zwischen ihnen eingefügt sind.

7. Verfahren zur Herstellung einer Lithiumionenbatterie ausgehend von einem Lithiumionenbatterievorläufer nach einem der vorstehenden Ansprüche, wobei das Verfahren aufweist:

   (i) einen Schritt der elektrochemischen Reduktion der positiven Vorläuferelektrode oder Vorläuferelektroden mittels der Lithiummetall-Opferelektrode, wobei dieser Schritt aufweist: Anlegen eines Potentials oder eines Stroms zwischen der positiven Elektrode und der Lithiummetall-Opferelektrode und Bewirken des teilweisen oder gesamten Verbrauchs der Lihiumionen-Opferelektrode, bis die Fluor- oder Oxyfluorschicht der positiven Vorläuferelektroden teilweise oder vollständig in eine nanostrukturierte Wandlerschicht umgewandelt ist; und
   (ii) einen Schritt der elektrochemischen Reduktion der negativen Vorläuferelektrode mittels der Lithiummetall-Opferelektrode des Batterievorläufers, wobei dieser Schritt aufweist: Durchgang eines Stroms von der Lithiummetall-Opferelektrode zur negativen Elektrode, bis die negative Elektrode ein Potential von weniger als 1,5V hat, gemessen bezüglich der Lithiummetall-Opferelektrode,

   wobei diese Schritte in der angegebenen Reihenfolge oder in der umgekehrten Reihenfolge durchgeführt werden können.

8. Verfahren nach Anspruch 7, **dadurch gekennzeichnet, dass** die Schritte (i) und (ii) bis zum vollständigen Verschwinden der Lithiummetall-Opferelektrode fortgeführt werden.

9. Verfahren nach Anspruch 7, **dadurch gekennzeichnet, dass** die Schritte (i) und (ii) vor dem vollständigen Verschwinden der Lithiummetall-Opferelektrode beendet werden.

10. Verfahren nach einem der Ansprüche 7 bis 9, **dadurch gekennzeichnet, dass** im Verlaufe der elektrochemischen Reduktion der positiven Vorläuferelektrode oder Vorläuferelektroden ein immer schwächeres Potential angelegt wird, wobei die Verringerung des angelegten Potentials bevorzugt stufenweise erfolgt.

**Claims**

1. Lithium-ion accumulator precursor comprising

   - one or more electrode modules (1) each formed by

     (a) at least one textile positive electrode precursor (2), composed of a textile metallic structure (4), fluorinated or oxyfluorinated at the surface (5), based on one or more transition metals from groups 4 to 12 of the Periodic Table of the Elements,
     (b) a polymeric separator (6), impregnated with a solution of a lithium salt in an aprotic organic solvent, said separator covering the entire surface of the textile positive electrode precursor,
     (c) a negative electrode precursor (3) forming a solid, preferably continuous, matrix which encloses the structure formed by (a) and (b), and

   - at least one sacrificial metallic lithium electrode, formed by a metallic lithium strip (9) supported by an electrical conductor (10), and separated from the electrode module or modules by a polymeric separator (11) impregnated with a solution of a lithium salt in an aprotic organic solvent,

   **characterized in that** the ratio of the cumulative geometric surface area of the lithium strip or strips to the cumulative geometric surface area of all of the textile positive electrode precursors is within the range from 0.05 to 0.33, preferably from 0.1 to 0.25.

2. Accumulator precursor according to Claim 1, **characterized in that** the surface-fluorinated or surface-oxyfluorinated metallic textile structure is a non-woven structure formed of short fibers preferably having an average length of between 1 cm and 50 cm, preferably between 2 cm and 20 cm, and an equivalent diameter of between 5 $\mu$m and 50 $\mu$m.

3. Accumulator precursor according to Claim 1 or 2, **characterized in that** the textile metallic structure is made of unalloyed or low-alloy steel.

4. Accumulator precursor according to any of the preceding claims, **characterized in that** a plurality of electrode modules of planar form and identical dimensions are superposed in parallel with one another.

5. Accumulator precursor according to any of the preceding claims, **characterized in that** the plane of the lithium strip of the sacrificial metallic lithium electrode is parallel to the plane of the electrode module or modules.

6. Accumulator precursor according to any of the preceding claims, **characterized in that** it further comprises an electron collector (8), in electrical contact with the negative electrode precursor (c) of each of the electrode modules, said electron collector being formed preferably by one or more copper grids arranged parallel to the plane of the electrode module or modules and intercalated between them.

7. Method for producing a lithium-ion accumulator from a lithium-ion accumulator precursor according to any of the preceding claims, comprising:

   (i) a step of electrochemically reducing the positive electrode precursor or precursors by the sacrificial metallic lithium electrode, this step comprising the application of a potential or a current between the positive electrode and the sacrificial metallic lithium electrode and effecting the partial or total consumption of the sacrificial metallic lithium electrode, until the fluoride or oxyfluoride layer of the positive electrode precursors has been partly or totally converted into a nanostructured conversion layer; and

(ii) a step of electrochemically reducing the precursor of the negative electrode by the sacrificial metallic lithium electrode of the accumulator precursor, this step comprising the passing of a current from the sacrificial metallic lithium electrode to the negative electrode until the negative electrode has a potential, measured relative to the sacrificial metallic lithium electrode, of less than 1.5 V,

it being possible for these two steps to be carried out in this order or in the reverse order.

8. Method according to Claim 7, **characterized in that** steps (i) and (ii) are continued until complete disappearance of the sacrificial metallic lithium electrode.

9. Method according to Claim 7, **characterized in that** steps (i) and (ii) are halted before complete disappearance of the sacrificial metallic lithium electrode.

10. Production method according to any of Claims 7 to 9, **characterized in that** during the electrochemical reduction of the positive electrode precursor or precursors, an increasingly low potential is applied, the applied potential being reduced preferably in stages.

FIG. 1

FIG. 2

FIG. 3

# EP 2 695 231 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2870639
- FR 2901641
- US 5871863 A

**Littérature non-brevet citée dans la description**

- **F. BADWAY ; N. PEREIRA ; F. COSANDEY ; C.G. AMATUCCI.** *J.Electrochem.Soc.,* 2003, vol. 150, A1209